# EUROPÄISCHE PATENTSCHRIFT

(11) **EP 2 183 114 B1**
(45) Veröffentlichungstag und Bekanntmachung des Hinweises auf die Patenterteilung: **21.09.2011**
(21) Anmeldenummer: 08784935.2
(22) Anmeldetag: 22.07.2008
(51) Int. Cl.: B41J 2/465, B41J 2/47, H04N 1/195

(54) **VERFAHREN ZUR STEIGERUNG DES DURCHSATZES UND ZUR REDUZIERUNG DER BEWEGUNGSUNSCHÄRFE**
METHOD FOR INCREASING THROUGHPUT AND REDUCING BLURRINESS DUE TO MOVEMENT
PROCÉDÉ POUR AUGMENTER LE DÉBIT ET RÉDUIRE LE FLOU DE MOUVEMENT

(30) Priorität: 17.08.2007 DE 102007038999
(43) Veröffentlichungstag der Anmeldung: 12.05.2010
(60) Teilanmeldung: 10004777.8
(73) Patentinhaber: Xeikon IP BV, 4529 GZ Eede (NL)
(72) Erfinder: HEDDE, John, 21403 Wendisch Evern (DE); EBELING, Guido, 23909 Ratzeburg (DE); NEBER, Sascha, 21365 Adendorf (DE)
(74) Vertreter: Knoop, Philipp
(86) Internationale Anmeldenummer: PCT/EP2008/005970
(87) Internationale Veröffentlichungsnummer: WO 2009/024225

(56) Entgegenhaltungen:
- DE-A1-102005 015 193
- US-A1- 2003 067 533
- US-B1- 6 504 567

## Beschreibung

Die vorliegende Erfindung betrifft ein Verfahren nach dem Oberbegriff des Anspruchs 1 zur Belichtung von Druckplatten, bei dem Licht aus einer Lichtquelle auf einem zweidimensionalen Lichtmodulator mit einer Vielzahl von Reihen aus lichtmodulierenden Zellen abgebildet wird und von diesen moduliert wird, wonach der Lichtmodulator über einen Abbildungsstrahlengang auf lichtempfindliches Material abgebildet wird, wobei das lichtempfindliche Material im Wesentlichen senkrecht zu der Richtung der Reihen aus lichtmodulierenden Zellen relativ zum Lichtmodulator mit einer Relativgeschwindigkeit bewegt wird und wobei die auf dem lichtempfindlichen Material abzubildenden Datenmuster beginnend in der ersten benutzten Reihe des Lichtmodulators nacheinander in jeder Reihe jeweils während einer Haltezeit angezeigt und anschließend zu der jeweils folgenden Reihe des Lichtmodulators verschoben werden, bis Datenmuster aus der letzten benutzten Reihe herausgeschoben werden, mit einer Verschieberate, durch welche die Abbildung eines gegebenen Datenmusters im Mittel stationär relativ zu dem lichtempfindlichen Material gehalten wird.

Das gattungsgemäße Verfahren ist beispielsweise aus der DE 41 21 509 A1 bekannt. Derartige Vorrichtungen und Verfahren sind insbesondere von Bedeutung für Prozesse, bei denen große Mengen von moduliertem Licht im blauen und ultravioletten Bereich benötigt werden, wie beispielsweise bei der Belichtung von Druckplatten, der Belichtung von gedruckten Schaltungen und bei der Stereolithografie. Das zugrundeliegende Prinzip ist, dass das lichtempfindliche Material kontinuierlich bewegt wird, während der Bildinhalt mit gleicher Geschwindigkeit in entgegengesetzte Richtung durch den Lichtmodulator gescrollt wird. Der Bildinhalt bleibt so annähernd ortsfest auf dem zu belichtenden Material. Die Belichtung baut sich durch Integration aller kurzen Einzelbelichtungen der Zellen einer Reihe auf. So werden Streifen mit einer der Anzahl der Reihen des Lichtmodulators entsprechenden Breite belichtet. Durch ein Aneinandersetzen mehrerer Streifen wird eine größere Fläche belichtet.

Problematisch bei diesem Belichtungsprinzip ist einerseits grundsätzlich die extrem große Datenmenge, welche pro Belichtungsschritt übertragen werden muss. Die Datenübertragungsrate zwischen einer ansteuernden Elektronik und dem Lichtmodulator ist hierbei naturgemäß begrenzt. Als Lichtmodulator werden zum Beispiel zweidimensionale Mikrospiegelzeilen (DMD_{™}), Flüssigkristallanzeigen, Beugungsgitter, Lichtventile oder reflektierende Flüssigkristallzeilen (LCOS) verwendet. Wenn die zu belichtenden Druckplatten ausreichend empfindlich sind und/oder wenn der von der Lichtquelle zur Verfügung gestellte Strahlungsfluss eine bestimmte Größe erreicht, wird der Durchsatz einer gattungsgemäßen Vorrichtung, gemessen in Anzahl belichteter Druckplatten pro Stunde oder in belichtete Quadratmeter pro Stunde begrenzt durch die Datenrate, mit der Daten zum Display übertragen werden können. Die Datenrate ist bei den herkömmlichen gattungsgemäßen Scrollingverfahren limitierend für den Durchsatz, da der komplette Lichtmodulator jedes Mal neu beschrieben werden muss, wenn das Bild um eine Reihe weitergeschaltet wird.

Die US 6,504,567 B1 und die DE 10 2005 015 193 A1 offenbaren eine Belichtungs- und Modulationsvorrichtung mit einer Lichtquelle, einem zweidimensionalen Lichtmodulator mit einer Vielzahl von Reihen aus lichtmodulierenden Zellen, mit einer Einrichtung zum Abbilden auf dem Lichtmodulator, mit einer Einrichtung zum Abbilden des Lichtmodulators auf lichtempfindlichem Material, mit einer Einrichtung zum Erzeugen einer Relativbewegung zwischen dem Lichtmodulator und dem lichtempfindlichen Material, wobei die Richtung der Relativbewegung im wesentlichen senkrecht zu der Richtung der Reihen aus lichtmodulierenden Zellen verläuft, sowie mit einer Einrichtung zum Anzeigen während einer Haltezeit und anschließendem Verschieben eines Datenmusters durch die verschiedenen Spalten des Lichtmodulators, mit einer Verschieberate, durch welche die Abbildung eines gegebenen Datenmusters im Mittel stationär relativ zu dem lichtempfindlichen Material während der Bewegung gehalten wird.

Aus der US 2003/0067533 A1 ist ein Verfahren zum Erzeugen von Pixeltakten und eine Vorrichtung zum Erzeugen von Pixeltakten bekannt.

Ein weiteres Problem beim herkömmlichen Scrollingverfahren der eingangs genannten Art ist, dass die Relativbewegung zwischen dem Lichtmodulator und dem lichtempfindlichen Material eine kontinuierliche Bewegung ist, wohingegen die Bewegung der Datenmuster auf dem Lichtmodulator eine sprunghafte Bewegung ist. Letzteres ist darauf zurückzuführen, dass die Bewegung, also das Scrollen, des Datenmusters über den Lichtmodulator nur in diskreten Schritten erfolgen kann, wobei die Schrittweite durch die Anzahl der Reihen und die Breite der lichtmodulierenden Zellen vorgegeben ist. Die Datenmuster bewegen sich also nicht kontinuierlich über den Lichtmodulator, sondern werden stattdessen in einer Reihe während einer Haltezeit, während derer sich das Datenmuster nicht bewegt, angezeigt und springen anschließend quasi abrupt zur benachbarten Reihe. Infolgedessen kann die Abbildung eines gegebenen Datenmusters nur im Mittel stationär relativ zu dem lichtempfindlichen Material gehalten werden. De facto bewegt sich jedoch die Abbildung des Datenmusters während der Haltezeit auf dem lichtempfindlichen Material mit einer Geschwindigkeit, welcher der Relativgeschwindigkeit zwischen dem Lichtmodulator und dem lichtempfindlichen Material entspricht. Diese Bewegung der Abbildung des Datenmusters während der Haltezeiten führt gemäß dem Stand der Technik ohne weitere Vorkehrungen zu einer prinzipiell bedingten Unschärfe der Belichtung von der Breite einer lichtmodulierenden Zelle des Lichtmodulators.

In der DE 41 21 509 A1 wurde daher vorgeschlagen, dass die Abbildung des Lichtmodulators auf dem zu belichtenden Material mithilfe einer Linse derart verkleinert wird, dass die belichtete Fläche auf dem zu belichtenden Material aufgrund der Verschmierung im Ergebnis wieder die Originalgröße erhält. Nachteilig hieran ist jedoch, dass die Auslegung der Verkleinerungsoptik unter Umständen problematisch sein kann, insbesondere, wenn die Relativgeschwindigkeit zwischen dem zu belichtenden Material und dem Lichtmodulator sowie die Haltezeit variiert werden sollen bzw. müssen. Im Prinzip müsste in diesen Fällen die Verkleinerungslinse an die neuen Parameter angepasst werden. Dies ist jedoch mit Nachteil nur mit vergleichsweise aufwendigen zusätzlichen optischen Komponenten möglich.

Der vorliegenden Erfindung liegt daher die Aufgabe zugrunde, den Durchsatz bei dem gattungsgemäßen Verfahren zu erhöhen. Gemäß einem anderen Aspekt der Erfindung ist es Aufgabe, das Verfahren der eingangs genannten Art so zu verbessern, dass eine Variierung des Durchsatzes vorgenommen werden kann, ohne dass eine Verschmierung der Abbildung des Lichtmodulators auf dem lichtempfindlichen Material auftritt.

Erfindungsgemäß wird diese Aufgabe durch die Merkmals Kombination des Anspruchs 1 gelöst, wobei insbesondere bei einem Verfahren der eingangs genannten Art die Abbildung des Datenmusters während der Haltezeit relativ zu dem lichtempfindlichen Material im Wesentlichen stationär gehalten wird. Durch diese Maßnahme ist es möglich, die Verschieberate des Datenmusters über die Reihen des Lichtmodulators zur Erhöhung des Durchsatzes zu vermindern. Durch eine Verminderung dieser Verschieberate vermindert sich die zu übertragende Datenmenge, und es ist möglich, eine höhere Relativgeschwindigkeit zwischen dem Lichtmodulator und dem lichtempfindlichen Material zu wählen, wodurch der Durchsatz erhöht wird. Dadurch, dass erfindungsgemäß die Abbildung des Datenmusters während der auf die beschriebene Weise verlängerten Haltezeit relativ zu dem lichtempfindlichen Material im Wesentlichen stationär gehalten wird, erfolgt dennoch keine Verschmierung der Abbildung auf dem lichtempfindlichen Material. Es kann somit mit Vorteil die zu übertragende Datenrate herabgesetzt werden, was zur Erhöhung des Durchsatzes führt, ohne dass Qualitätsverluste bei der Belichtung auftreten.

Andererseits könnte erfindungsgemäß die Haltezeit verkürzt werden, um zu erreichen, dass die Abbildung des Datenmusters aufgrund der kurzen Haltezeit praktisch stationär auf dem lichtempfindlichen Material ist, obwohl im Prinzip eine Relativbewegung zwischen der Abbildung und dem lichtempfindlichen Material existiert.

Gemäß der Erfindung ist vorgesehen, dass die Relativbewegung zwischen dem Lichtmodulator und dem lichtempfindlichen Material während der-Haltezeit im Wesentlichen ausgeglichen wird. Durch diese Maßnahme ist es möglich, die Haltezeit zu erhöhen, ohne dass eine Verschmierung der Abbildung des Lichtmodulators auf dem Druckmaterial entsteht.

Wenn gemäß der Erfindung die Abbildung des Datenmusters relativ zum Lichtmodulator mit einem periodischen Bewegungsprofil bewegt wird, ist es mit Vorteil möglich, die Relativbewegung zwischen dem Lichtmodulator und dem lichtempfindlichen Material besonders wirkungsvoll auszugleichen während der Haltezeiten. Hiermit kann beispielsweise eine Aktualisierung des auf dem Lichtmodulator abgebildeten Datenmusters nur jede zweite Reihe erfolgen. Hierdurch wird die Datenrate zum Lichtmodulator halbiert. Dennoch bleibt die volle Auflösung erhalten, ohne dass die beim herkömmlichen Scrollingverfahren auftretende Verschmierung auftritt.

Das erfindungsgemäße Verfahren sieht vor, dass das Bewegungsprofil eine flach ansteigende Flanke und eine steil abfallende Flanke, insbesondere eine Sägezahnform aufweist. Im Prinzip wird der konstanten Relativbewegung zwischen dem Lichtmodulator und dem photosensitiven Material eine zusätzliche Bewegung der Abbildung des Lichtmodulators relativ zur gesamten Belichtungseinheit als Inertialsystem überlagert. Durch die flach ansteigende Flanke wird erreicht, dass die Relativbewegung der Abbildung des Lichtmodulators und dem zu belichtenden photosensitiven Material die meiste Zeit Null ist, also vollständig aufgehoben wird. Wenn also beispielsweise die Relativbewegung zwischen Lichtmodulator und zu belichtendem Material derart realisiert ist, dass der Lichtmodulator über das in der Belichtungseinheit fixierte lichtempfindliche Material verfahren wird, wird das Bild aufgrund des Bewegungsprofils während der Haltezeit auf dem zu belichtenden Druckmaterial stationär gehalten, obwohl der Lichtmodulator sich weiterhin gegenüber der Druckplatte bewegt. Die zusätzlich überlagerte periodische, insbesondere sägezahnförmige, Bewegung wirkt somit während der Haltezeit dieser Relativbewegung entgegen. Die flach ansteigende Flanke des Bewegungsprofils in der Ort-Zeit-Darstellung erzeugt hierbei eine Relativbewegung der Abbildung relativ zum Lichtmodulator, welche der Relativbewegung zwischen Lichtmodulator und Druckplatte diese kompensierend entgegengesetzt ist. Während der Flanken des Sägezahns wird erfindungsgemäß in möglichst kurzer Zeit, idealerweise in unendlich kurzer Zeit, die Abbildung des Lichtmodulators auf der Druckplatte sprunghaft auf die Grundstellung zurückgestellt zur Vorbereitung auf das Überspringen des Datenmusters auf die nächste Datenreihe auf dem Lichtmodulator.

Erfindungsgemäß ist vorgesehen dass, das Bewegungsprofil mit der Verschiebung der Datenmuster zwischen den Reihen synchronisiert wird, wobei insbesondere die flach ansteigende Flanke während der Haltezeit ausgeführt wird.

Da es praktisch nicht möglich ist, eine unendlich schnelle Bewegung zu erzeugen, werden die steil abfallenden Flanken im Orts-Zeit-Diagramm nicht senkrecht sein können. Wenn daher in spezieller Ausgestaltung der Erfindung die Lichtquelle während der steil abfallenden Flanken ausgeschaltet wird, wird mit Vorteil erreicht, dass auch während der steil abfallenden Flanken im Bewegungsprofil keine Verschmierung der Abbildung auf dem Druckmaterial auftritt. Durch diese Maßnahme könnte im Rahmen der Erfindung auch ein periodisches Bewegungsprofil gewählt werden, welches keine steil abfallende Flanke aufweist. Beispielsweise kann die abfallende Flanke betragsmäßig die gleiche Steigung haben wie die ansteigende Flanke.

Bei einer anderen vorteilhaften Ausführungsform des erfindungsgemäßen Verfahrens werden alle lichtmodulierenden Zellen während der steil abfallenden Flanke inaktiv geschaltet. Auch durch diese Maßnahme wird ein Verschmieren der Abbildung des Lichtmodulators auf dem Druckmaterial selbst während der abfallenden Flanken verhindert. Dies auch dann, wenn die abfallende Flanke in der Praxis eine endliche zeitliche Breite aufweist. Die Wirkung dieser Maßnahme ist daher im Ergebnis die gleiche wie das Ausschalten der Lichtquelle während der abfallenden Flanke.

Gemäß einer anderen bevorzugten Ausführungsform des erfindungsgemäßen Verfahrens wird der Abbildungsstrahlengang verschoben, um die Abbildung des Datenmusters zu bewegen. Eine Verschiebung des Abbildungsstrahlengangs lässt sich durch Einfügen eines geeigneten optischen Elementes im Strahlengang zwischen Lichtmodulator und Druckplatte erzeugen, ohne dass der Lichtmodulator selber bewegt werden muss.

In weiterer Ausgestaltung dieser Variante des erfindungsgemäßen Verfahrens wird eine elektrische Spannung unter Ausnutzung eines elektrooptischen Effekts, insbesondere des Kerr-Effekts, variiert, um den Abbildungsstrahlengang zu verschieben. Zum Beispiel kann eine Kerr-Zelle in den Abbildungsstrahlengang eingefügt werden, welche mit einer variablen Spannung betrieben wird. Hierbei werden die optischen Eigenschaften, insbesondere die Brechzahl, der Kerr-Zelle durch die anliegende elektrische Spannung verändert. Der Vorteil dieser Maßnahme ist, dass keine mechanisch beweglichen Teile erforderlich sind, um die erfindungsgemäße Bewegung der Abbildung des Datenmusters relativ zum Lichtmodulator zu generieren.

Alternativ und/oder zusätzlich kann erfindungsgemäß ein Umlenkspiegel und/oder eine Linse und/oder ein Prisma und/oder eine Keilplatte mechanisch bewegt werden, um den Abbildungsstrahlengang zu verschieben. Die genannten optischen Elemente werden im Abbildungsstrahlengang zwischen Lichtmodulator und Druckplatte angeordnet.

Gemäß einer vorteilhaften Variante des Verfahrens nach der Erfindung wird die Haltezeit kleiner gewählt als der Kehrwert der Verschieberate. Auf diese Weise kann ohne eine mechanische Bewegung, wie bei den zuvor beschriebenen Ausführungsbeispielen, und auch ohne eine Verkleinerung der Abbildung des Lichtmodulators, wie im oben gewürdigten Stand der Technik, erreicht werden, dass eine Verschmierung des Abbildes aufgrund der Relativbewegung während der Haltezeit im Wesentlichen praktisch vermieden wird. Aufwendige Maßnahmen zum Ausgleich der Bewegung während der Haltezeit oder zur Verkleinerung der Abbildung können daher mit Vorteil mitunter entbehrlich sein. Voraussetzung ist, dass eine ausreichend starke Lichtquelle mit entsprechendem Lichtstrom verwendet wird, sodass eine Verkürzung der effektiven Belichtungszeit dennoch zu einer vollständigen Belichtung führt. Gemäß dem Stand der Technik entspricht demgegenüber die Haltezeit im Wesentlichen dem Kehrwert der Verschieberate.

Bei einer anderen günstigen Ausgestaltung des erfindungsgemäßen Verfahrens wird die Lichtquelle gepulst betrieben und/oder der Lichtmodulator periodisch inaktiv geschaltet, um die Haltezeit zu reduzieren.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: eine schematische Darstellung einer vollständigen Belichtungs- und Modulationsvorrichtung;
- Fig. 2:: eindimensionale Darstellung der Position des Belichtungsmusters auf einem Druckbogen zu verschiedenen Zeitpunkten t₁, t₂, ... t₆, sowie der zeitlich kumulierten Belichtung bei Belichtung gemäß Stand der Technik;
- Fig. 3:: eindimensionale Darstellung der Position des Belichtungsmusters auf einem Druckbogen zu verschiedenen Zeitpunkten t₁ t₂, ... t₁₀, bei Belichtung gemäß einem Aspekt der Erfindung mit einer gegenüber Fig. 2 halbierten Datenübertragungsrate zum Lichtmodulator;
- Fig. 4:: Diagramm zur schematischen Veranschaulichung des zeitlichen Verlaufs der Position des Bildes des Lichtmodulators bei erfindungsgemäßer Belichtung in Darstellungen (a) relativ zum Lichtmodulator, (b) relativ zur Position des Lichtmodulators sowie (c) relativ zum Druckbogen.

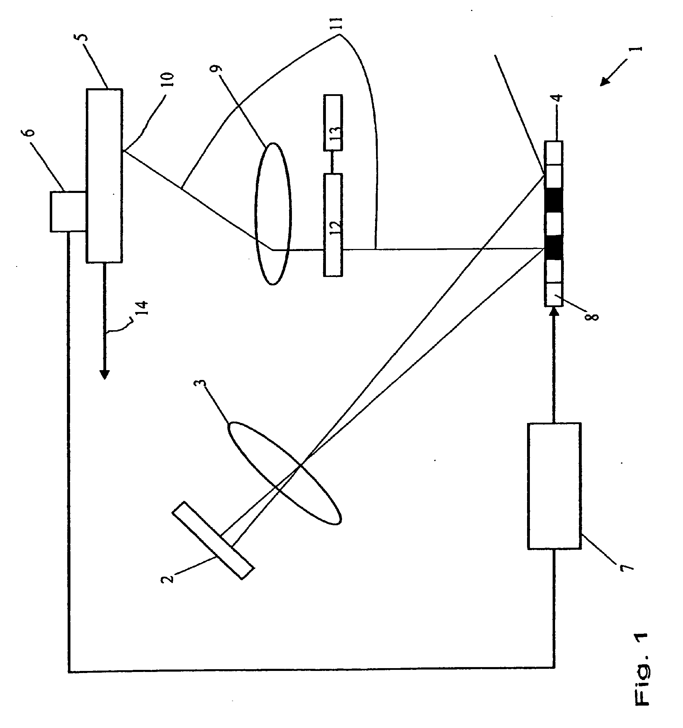

In Fig. 1 ist schematisch eine Belichtungs- und Modulationsvorrichtüng 1 gezeigt. Eine Lichtquelle 2 wird unter Verwendung einer ersten Linse 3 auf einem zweidimensionalen Lichtmodulator 4 abgebildet. Der Lichtmodulator ist eine Mikrospiegelmatrix (DMD®) mit in Reihen und Zeilen angeordneten, individuell kippbaren Mikrospiegeln, die jeweils als Lichtventil wirken. Die Reihen der Mikrospiegelmatrix verlaufen senkrecht in die Zeichenebene hinein, wohingegen die Zeilen in der Zeichenebene verlaufen. Entsprechend ist in Fig. 1 eine Zeile bestehend aus sieben Reihen zu erkennen.

Die Position des lichtempfindlichen Materials 5 relativ zum Lichtmodulator 4 ist durch eine Positioniereinrichtung 6 veränderbar. Die Relativbewegung erfolgt in Richtung parallel zu den Zeilen des DMD 4, also senkrecht zu den Reihen. Datenmuster werden unter Verwendung einer Treiberschaltung 7 in die erste Spalte mit Zellen 8 des Lichtmodulators 4 übertragen. Wichtig hierbei ist die Synchronisation der Datenmusterübertragung und der Relativbewegung zwischen Lichtmodulator 4 und lichtempfindlichem Material 5. Das in die erste Reihe übertragene Datenmuster wird dort während einer Haltezeit angezeigt. Die Haltezeit entspricht im Wesentlichen dem Kehrwert der Bildrate, mit welcher Daten auf dem Lichtmodulator 4 aktualisiert werden. Anschließend wird das Datenmuster von der ersten Reihe in Richtung der Relativbewegung in die nächste Reihe verschoben, so dass das auf das lichtempfindliche Material 5 übertragene Datenmuster im Wesentlichen ortsfest auf diesem verbleibt. Der Lichtmodulator 4 besteht aus mehreren Reihe von Zellen 8. Das auf den Lichtmodulator 4 übertragene Datenmuster besteht aus Kombinationen von aktivierten und inaktivierten Zellen 8. Werden die Zellen 8 aktiviert, wird das auf sie fallende Licht über eine zweite Linse 9 auf das lichtempfindliche Material 5 übertragen. Das Licht, das auf inaktive Zellen trifft, wird vom lichtempfindlichen Material 5 weggelenkt.

Die Abbildung eines auf den Zellen 8 einer Reihe des Lichtmodulators 4 angezeigten Datenmusters auf dem lichtempfindlichen Material 5 ist mit der Bezugsziffer 10 gekennzeichnet. Die Belichtungs- und Modulationsvorrichtung 1 ist allgemein stationär. Die oben beschriebenen prinzipiellen Bauteile der Belichtungs- und Modulationsvorrichtung 1 entsprechen den im Stand der Technik eingesetzten. Zusätzlich zu den bekannten Bauteilen weist die in Figur 1 dargestellte Belichtungs- und Modulationsvorrichtung 1 im Abbildungsstrahlengang 11 zwischen dem Lichtmodulator 4 und dem lichtempfindlichen Material 5 eine nur schematisch dargestellte Kerr-Zelle 12 auf. Die Kerr-Zelle 12 ist über eine variable Spannungsquelle 13, die hier ebenfalls nur schematisch angedeutet ist, ansteuerbar. Die Kerr-Zelle 12 ist in der Figur 1 exemplarisch im Abschnitt zwischen dem Lichtmodulator 4 und der Linse 9 des Abbildungsstrahlengangs 11 angeordnet. Es ist jedoch auch denkbar, dass die Kerr-Zelle 12 in dem Abschnitt zwischen der Linse 9 und dem lichtempfindlichen Material 5 des Abbildungsstrahlengangs 11 angeordnet ist.

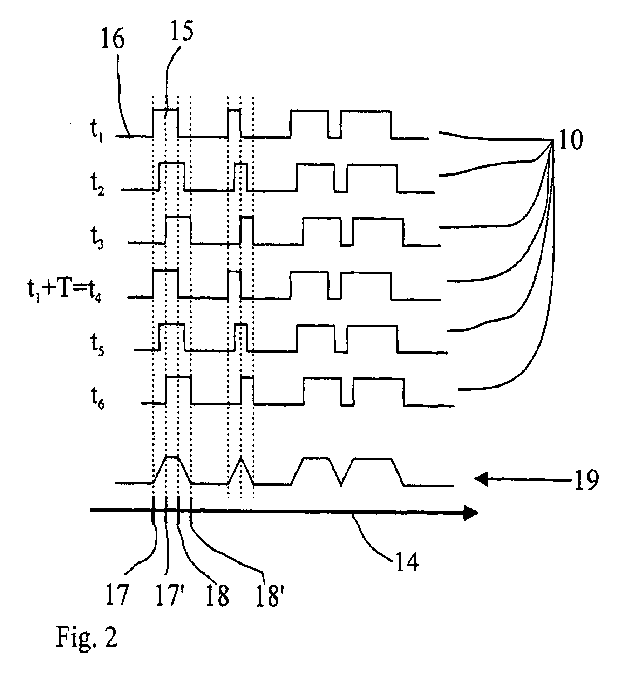

In Figur 2 ist zur Veranschaulichung des Nachteils herkömmlicher Belichtungs- und Modulationsvorrichtungen in einem Diagramm schematisch die Ortsposition der Abbildung 10 des auf dem Lichtmodulator 4 angezeigten Datenmusters dargestellt. In dem Diagramm ist in horizontaler Richtung eine Ortsachse 14 in Richtung der durch die Positioniereinrichtung 6 aufgeprägten Relativbewegung des lichtempfindlichen Materials 5 dargestellt. Oberhalb der Ortsachse 14 des lichtempfindlichen Materials 5 ist die Abbildung 10 des auf dem Lichtmodulator 4 angezeigten Datenmusters zu verschiedenen Zeitpunkten t₁, t₂, ..., t₆ dargestellt. Bei jedem Belichtungsmuster sind beleuchtete Abschnitte 15 durch ein digital "1" Signal angezeigt, wohingegen unbeleuchtete Abschnitte 16 durch ein digital "Null" Signal veranschaulicht sind. Das Belichtungsmuster t₁, ist in der obersten Zeile oberhalb der Ortsachse 14 veranschaulicht. In der darunter folgenden Zeile ist das Belichtungsmuster auf dem Druckbogen 5 zu einem.Zeitpunkt t₂ dargestellt, wobei t₂=t₁+Δt gilt, mit Δt<T, wobei T gleich die Haltezeit ist. Wie zu erkennen, ist das Belichtungsmuster t₂ gegenüber dem Belichtungsmuter t₁ geringfügig nach rechts auf der Ortsachse 14 verschoben. Dies ist deutlich zu erkennen an den verschobenen Positionen der beleuchteten Abschnitte 15. Da sich der Lichtmodulator 4 und die Druckplatte 5 mit einer konstanten Geschwindigkeit relativ zueinander bewegen, tritt die veranschaulichte Verschiebung der beleuchteten Abschnitte 15 auf der Ortsachse 14 auf der Druckplatte 5 während der Haltezeiten auf.

Das Belichtungsmuster t₃ entspricht dem auf der Druckplatte 5 angezeigten Belichtungsmuster, also der Abbildung 10 des Lichtmodulators 4, zu einem Zeitpunkt t₃, wobei t₃-t₁<T, mit der Haltezeit T des Datenmusters auf dem Lichtmodulator 4. Wie zu erkennen, ist bei dem Belichtungsmuster t₃ eine weitere Verschiebung entlang der Ortsachse 14 der beleuchteten Abschnitte 15 zu beobachten. Die Anfangsposition 17 des beleuchteten Abschnitts 15 ist zum Zeitpunkt t₃ auf der Ortsachse 14 zu der verschobenen Anfangsposition 17' verschoben auf der Druckplatte 5. Ebenso ist die Endposition 18 des Belichtungsmusters t₁ zum Zeitpunkt t₃ entsprechend dem Belichtungsmuster t₃ auf die verschobene Endposition 18' verschoben auf der Druckplatte 5.

Zum Zeitpunkt t₄, wobei t₄=t₁+T, ist der beleuchtete Abschnitt 15 auf der Ortsachse 14 des Druckbogens 5 wieder zwischen der ursprünglichen Anfangsposition 17 und ursprünglichen Endposition 18 entsprechend dem Belichtungsmuster t₁ angeordnet. Auf dem Lichtmodulator 4 ist das Datenmuster zwischen dem Zeitpunkt t₃ und dem Zeitpunkt t₄ auf benachbarte Reihe umgesprungen. Das Belichtungsmuster t₄ entspricht daher exakt dem Belichtungsmuster t₁.

Die Belichtungsmuster t₅, t₆ entsprechen den Belichtungsmustern t₂ bzw. t₃, um zu veranschaulichen, dass sich der Vorgang wiederholt. Wieder tritt eine Verschiebung des beleuchteten Abschnitts 15 auf der Ortsachse 14 des Druckmaterials 5 während der Haltezeit T, während derer ein Datenmuster auf dem Lichtmodulator 4 gehalten wird, auf. Die Verschiebung ist zurückzuführen auf die konstante Relativbewegung zwischen Lichtmodulator 4 und Druckbogen 5.

Wie in dem untersten Belichtungsmuster der Figur 2 zu erkennen, entspricht die kumulierte Dosis 19 der Belichtung auf dem Druckbogen 5 nicht exakt dem Belichtungsmuster t₁, welches der Abbildung 10 des Lichtmodulators 4 auf dem Druckbogen 5 entspricht. Stattdessen ist die kumulierte Dosis 19 gegenüber den Belichtungsmustern t₁, ..., t₆ aufgrund der Verschiebung während der Haltezeit beim Stand der Technik mit Nachteil verschmiert.

Die Verschmierung, also der Abstand zwischen den Anfangspunkten 17, 17' bzw. den Endpunkten 18, 18', entspricht auf der Ortsachse 14 einer Ortsverschiebung entsprechend dem Produkt aus der Haltezeit T und der Relativgeschwindigkeit v zwischen Druckbogen 5 und Lichtmodulator 4.

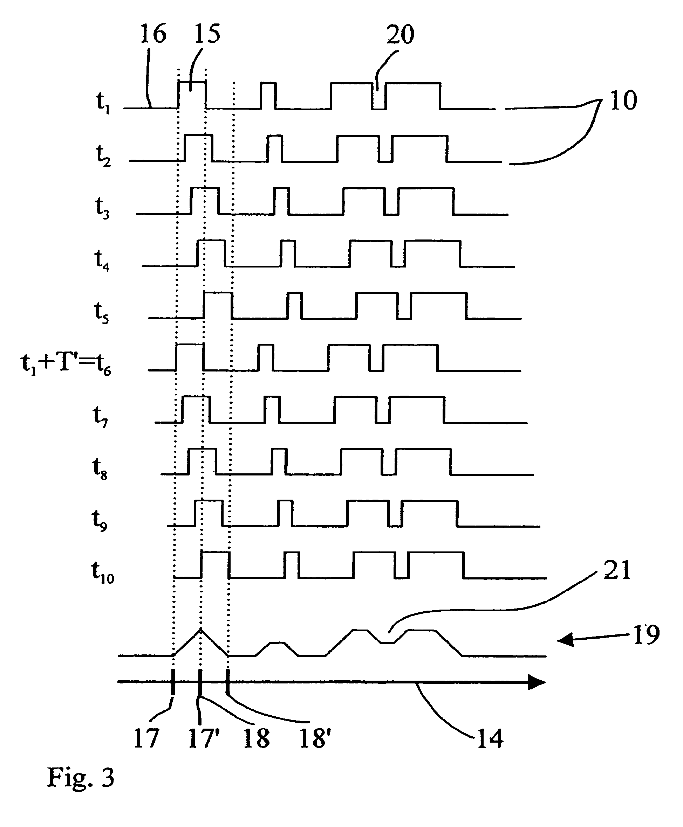

In der Figur 3 ist die gleiche Darstellung wie in Figur 2 gewählt, um einen Aspekt der Erfindung zu verdeutlichen. Gegenüber der Figur 2 unterscheidet sich Figur 3 darin, dass die Haltezeit T' doppelt so groß gewählt ist, wie die Haltezeit T in Figur 2. Dies führt mit Vorteil, wie weiter oben erläutert, zu einer Erhöhung des erzielbaren Durchsatzes bei der Belichtung. Dementsprechend entspricht erst das Belichtungsmuster t₆ dem Belichtungsmuster t₁. Das heißt, erst zum Zeitpunkt t₆ wird auf dem Lichtmodulator 4 das Datenmuster in die nächste Reihe verschoben, sodass die Haltezeit T', während derer die Abbildung 10 auf der Ortsachse 14 des Druckbogens 5 verschoben wird, doppelt so groß ist wie im Falle der Figur 2. Die Belichtungsmuster t₇, t₈, t₉, t₁₀ entsprechen jeweils den Belichtungsmustern t₂, t₃, t₄ bzw. t₅, wobei jedoch bei den Zeitpunkten t₇, t₈, t₉, t₁₀ das Datenmuster auf dem Lichtmodulator 4 um eine Reihe weiter verschoben ist als bei den Zeitpunkten t₁, t₂, t₃, t₄, t₅. Wie bei dem maximal verschobenen Belichtungsmuster t₅ kurz vor dem Umspringen des Datenmusters auf dem Lichtmodulator 4 zum Zeitpunkt t₆ zu erkennen, ist die Verschiebung des beleuchteten Abschnitts 15 entlang der Ortsachse 14 so ausgeprägt, dass die verschobene Anfangsposition 17' des beleuchteten Abschnitts 15 mit der unverschobenen Endposition 18 des beleuchteten Abschnitts 15 zusammenfällt. Dies führt bei Betrachtung der kumulierten Dosis 19 dazu, dass der rechteckige beleuchtete Abschnitt 15 in der kumulierten Dosis tatsächlich als dreieckiger Bereich belichtet wird. Außerdem führt die verstärkte Verschmierung dazu, dass ein schmaler unbeleuchteter Abschnitt 20, welcher in den Belichtungsmustern t₁, ..., t₁₀ entsprechend dem auf dem Lichtmodulator 4 anliegenden Datenmuster vorhanden ist, in dem kumulierten Dosis 19 nur noch als schwach ausgeprägte Vertiefung 21 belichtet wird.

Anhand der Figur 3 wird somit deutlich, dass eine Erhöhung der Haltezeit T nach der Haltezeit T' entsprechend dem Zweifachen der Haltezeit T, zu einer in manchen Anwendungen nicht hinnehmbaren Verschmierung der kumulierten Dosis 19 führt. Eine Erhöhung des Durchsatzes einer Belichtungs- und Modulationsvorrichtung 1 durch Vermindern der Datenrate auf dem Wege der Erhöhung der Haltezeiten T bzw. T' ist daher wegen des Qualitätsverlustes nicht möglich.

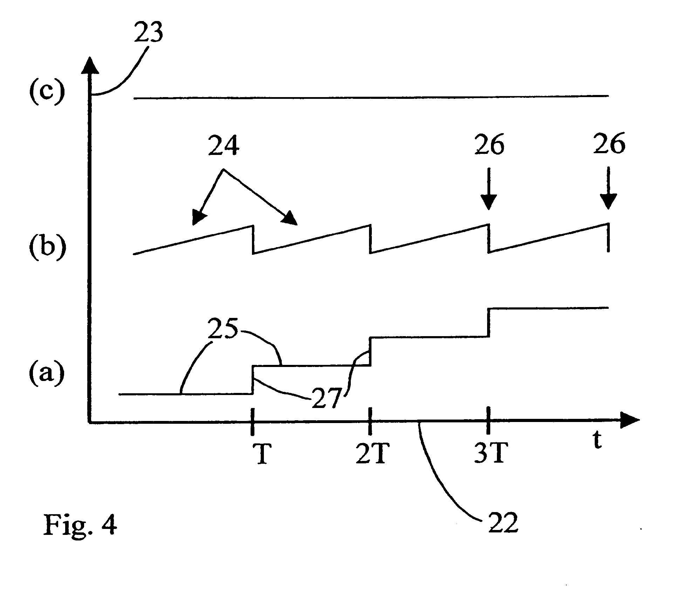

In Figur 4 ist das der Erfindung zugrundeliegende Prinzip veranschaulicht. In Abhängigkeit von der auf der Zeitachse 22 aufgetragenen Zeit t sind auf der vertikalen Ortsachse 23 die Positionen der Abbildung 10 des Lichtmodulators 4 bei erfindungsgemäßer Belichtung (a) relativ zum Lichtmodulator, (b) relativ zur Position des Lichtmodulators gegenüber der Belichtungs- und Modulationsvorrichtung 1 sowie (c) relativ zum Druckbogen dargestellt. Zunächst ist in der Kurve (a) zu erkennen, dass das Bild entsprechend dem bekannten Scrollingverfahren stufenweise über den bekannten Lichtmodulator 4 bewegt wird. Bezüglich dieser Kurve entspricht die Ortsachse 23 einer Achse auf dem Lichtmodulator 4, welche senkrecht zu den Reihen verläuft. Die Stufenweite entspricht in dieser Darstellung der Haltezeit T.

Die Kurve (b) in Figur 4 zeigt die Position der Abbildung 10 des Lichtmodulators 4 im zeitlichen Verlauf relativ zur Position des Lichtmodulators, wobei die Position des Lichtmodulators 4 gegenüber der stationären Belichtungs- und Modulationsvorrichtung 1 gemessen ist. Wie zu erkennen, wird gemäß der Erfindung die Abbildung (c) relativ zur Position des Lichtmodulators periodisch mit einer sägezahnförmigen Bewegungskurve bewegt. Wie zu erkennen, ist die Sägezahnkurve synchronisiert mit den Stufen der Kurve (a), also mit dem reihenweisen Umspringen des Datenmusters auf dem Lichtmodulator 4. Die Synchronisation ist gemäß dem erfindungsgemäßen Verfahren derart gewählt, dass jeweils eine relativ flach ansteigende Flanke 24 während der Halteplateaus 25 des Datenmusters auf dem Lichtmodulator 2 anliegt. Die steil abfallenden Flanken 26, welche in der Kurve (b) der Figur 4 idealisiert senkrecht dargestellt sind, entsprechend einer unendlichen Geschwindigkeit, sind mit den Stufenkanten 27 des Bewegungsprofils der Datenmuster auf dem Lichtmodulator 4 synchronisiert.

Schließlich ist in der Bewegungskurve (c) in der Figur 4 die Position der Abbildung 10 des Lichtmodulators 4 relativ zum Druckbogen 5 idealisiert veranschaulicht, wenn das erfindungsgemäße Verfahren angewendet wird. Wie zu erkennen, ist die Abbildung 10 auf dem Druckbogen 5 aufgrund der periodischen, sägezahnförmigen Bewegung der Abbildung 10 relativ zum Lichtmodulator 4, welche in Kurve (b) dargestellt ist, völlig stationär. Insbesondere tritt keine Verschmierung auf wie gemäß Stand der Technik anhand der Figuren 2 und 3 veranschaulicht wurde. Aufgrund der nach dem erfindungsgemäßen Verfahren überlagerten Bewegung der Abbildung 10 gegenüber dem Lichtmodulator 4 wird somit die Verschmierung auf der Druckplatte 5 während der Haltezeiten des Datenmusters auf dem Lichtmodulator 4 kompensiert. Die Kompensation ist in dem idealisierten Fall einer Sägezahnkurve gemäß Kurve (b) der Figur 4 mit senkrecht abfallenden Flanken 26 vollkommen. Da erfindungsgemäß keine Verschmierung der Abbildung auf der Druckplatte 5 erfolgt, kann zur Erhöhung des Durchsatzes mit Vorteil die Datenrate, mit welcher die Treiberschaltung 7 Daten auf den Lichtmodulator 4 überträgt, vermindert werden, obwohl dies zwangsläufig zur Erhöhung der Haltezeit T führt.

Um die in Kurve (b) der Figur 4 dargestellte Bewegung der Abbildung 10 gegenüber dem Lichtmodulator 4 technisch zu erzeugen, kann in bevorzugter Ausführung der Erfindung die Kerr-Zelle 12 in den Abbildungsstrahlengang 11 vor oder hinter der Linse angeordnet werden. Durch Variierung der Spannungsquelle 13 wird der Brechungsindex in der Kerr-Zelle 12 in Abhängigkeit von der anliegenden Spannung verändert. Hierdurch wird die Abbildung 10 des Lichtmodulators 4 gegenüber dem Lichtmodulator 4 verschoben.

Wenn die Spannung der Spannungsquelle 13 einen dem Sägezahnprofil gemäß Kurve (b) der Figur 4 angenäherten Verlauf hat, wird das Abbild 10 relativ zur Druckplatte 5 nahezu vollständig stationär sein, wie idealisiert in der Kurve (c) der Figur 4 veranschaulicht.

Falls es nicht gelingt, das Bewegungsprofil der Abbildung 10 exakt dem Sägezahn gemäß Kurve (b) der Figur 4 anzunähern, insbesondere falls die steil abfallende Flanke 26 in der Praxis deutlich weniger steil abfallend gestaltbar ist, kann die Lichtquelle 2 während der abfallenden Flanke 26 ausgeschaltet werden, um eine Verschmierung der Abbildung 10 auf der Druckplatte 5 zu vermeiden. Ebenfalls kann über die Treiberschaltung 7 während der abfallenden Flanken 26 der Lichtmodulator 4 vollständig inaktiv geschaltet werden, mit dem gleichen Erfolg wie das Abschalten der Lichtquelle 2.

Die erfindungsgemäße Relativbewegung gemäß dem Bewegungsprofil nach Kurve (b) der Figur 4 kann technisch ebenfalls realisiert werden, indem der Lichtmodulator 4 gegenüber der stationären Belichtungs- und Modulationsvorrichtung 1 mechanisch bewegt wird, insbesondere durch einen piezoelektrischen Antrieb. Es kann auch die Positioniereinrichtung 6 mit einem zusätzlichen Antrieb versehen sein, welcher ein zusätzliches Bewegunsprofil gemäß Kurve (b) der gemäß Figur 4 dem lichtempfindlichen Material 5 aufprägt.

Schließlich kann das anhand der Figuren 2 und 3 bei herkömmlichen Belichtungsvorrichtungen auftretende Problem der Verschiebung erfindungsgemäß gelöst werden, indem die Lichtquelle 2 gepulst betrieben wird, sodass eine Belichtung der Druckplatte 5 nicht während des gesamten Halteplateaus 25 gemäß Kurve (a) der Figur 4 erfolgt.

Somit ist ein Verfahren vorgeschlagen, mit welchem das prinzipiell nach Stand der Technik auftretende Problem der Verschmierung der kumulierten Dosis 19 auf der Druckplatte 5 abgeschwächt oder behoben wird, was zu einer Qualitätsverbesserung einerseits und zur Möglichkeit der Durchsatzerhöhung durch Verminderung der Datenübertragungsrate andererseits führt.

### BEZUGSZEICHENLISTE

- 1: Belichtungs- und Modulationsvorrichtung
- 2: Lichtquelle
- 3: Linse
- 4: Lichtmodulator
- 5: lichtempfindliches Material
- 6: Positioniereinrichtung
- 7: Treiberschaltung
- 8: Zellen
- 9: Linse
- 10: Abbildung
- 11: Abbildungsstrahlengang
- 12: Kerrzelle
- 13: variable Spannungsquelle
- 14: Ortsachse
- 15: beleuchteter Abschnitt
- 16: unbeleuchteter Abschnitt
- 17: Anfangsposition
- 17': verschobene Anfangsposition
- 18: Endposition
- 18': verschobene Endposition
- 19: kumulierte Dosis
- 20: schmaler unbeleuchteter Bereich
- 21: Vertiefung
- 22: Zeitstrahl
- 23: Ortsachse
- 24: flach ansteigende Flanke
- 25: Halteplateau
- 26: steil abfallende Flanke
- 27: Stufenkante

## Patentansprüche

1. Verfahren zur Belichtung von Druckplatten (5), bei dem Licht aus einer Lichtquelle (2) auf einem zweidimensionalen Lichtmodulator (4) mit einer Vielzahl von Reihen aus lichtmodulierenden Zellen (8) abgebildet wird und von diesem moduliert wird, wonach der Lichtmodulator (4) über einen Abbildungsstrahlengang (11) auf lichtempfindliches Material (5) abgebildet wird, wobei das lichtempfindliche Material (5) im wesentlichen senkrecht zu der Richtung der Reihen aus lichtmodutierenden Zellen (8) relativ zum Lichtmodulator (4) mit einer Relativgeschwindigkeit bewegt wird und wobei die auf dem lichtempfindlichen Material (5) abzubildenden Datenmuster beginnend in der ersten benutzten Reihe des Lichtmodulators (4) nacheinander in jeder Reihe jeweils während einer Haltezeit (T, T') angezeigt und anschließend zu der jeweils folgenden Reihe des Lichtmodulators (4) verschoben werden, bis Datenmuster aus der letzten benutzten Reihe herausgeschoben werden, mit einer Verschieberate, durch welche die Abbildung (10) eines gegebenen Datenmusters im Mittel stationär relativ zu dem lichtempfindlichen Material (5) gehalten wird, wobei die Abbildung (10) des Datenmusters während der Haltezeit (T, T') relativ zu dem lichtempfindlichen Material (5) im wesentlichen stationär gehalten wird, indem
die Relativbewegung zwischen dem Lichtmodulator (4) und dem lichtempfindlichen Material (5) während der Haltezeit im Wesentlichen ausgeglichen wird, **dadurch gekennzeichnet, dass** die Abbildung (10) des Datenmusters relativ zum Lichtmodulator (4) mit einem periodischen Bewegungsprofil bewegt wird,, wobei das Bewegungsprofil in einer Orts-Zeit-Darstellung eine flach ansteigende Flanke (24) und eine steil abfallende Flanke (26), insbesondere eine Sägezahnform, aufweist, dass das Bewegungsprofil mit der Verschiebung der Datenmuster zwischen den Reihen synchronisiert wird, wobei insbesondere die flach ansteigende Flanke (24) während der Haltezeit (T, T') ausgeführt wird, dass die Lichtquelle (2) während der steil abfallenden Flanke (26) ausgeschaltet wird und/oder alle lichtmodulierenden Zellen (8) während der steil abfallenden Flanke (26) inaktiv geschaltet werden.

2. Verfahren nach einem der vorhergehenden Ansprüche, **dadurch gekennzeichnet, dass** der Abbildungsstrahlengang (11) verschoben wird, um die Abbildung (10) des Datenmusters zu bewegen.

3. Verfahren nach einem der vorhergehenden Ansprüche, **dadurch gekennzeichnet, dass** eine elektrische Spannung (13) unter Ausnutzung eines elektrooptischen Effekts, insbesondere des Kerr-Effekts, variiert wird, um den Abbildungsstrahlengang (11) zu verschieben.

4. Verfahren nach einem der vorhergehenden Ansprüche 2 oder 3, **dadurch gekennzeichnet, dass** ein Umlenkspiegel und/oder eine Linse (9) und/oder ein Prisma und/oder eine Keilplatte mechanisch bewegt wird, um den Abbildungsstrahlengang zu verschieben.

5. Verfahren nach einem der vorhergehenden Ansprüche, **dadurch gekennzeichnet, dass** die Haltezeit (T, T') kleiner gewählt wird als der Kehrwert der Verschieberate.

6. Verfahren nach Anspruch 5, **dadurch gekennzeichnet, dass** die Lichtquelle (2) gepulst betrieben wird und/oder der Lichtmodulator (4) periodisch inaktiv geschaltet wird, um die Haltezeit (T, T') zu reduzieren.

## Claims

1. Method for illuminating pressure plates (5), in which light from a light source (2) is imaged on a two-dimensional light modulator (4) having a plurality of rows of light-modulated cells (8) and is modulated by said modulator, the light modulator (4) subsequently being imaged onto light-sensitive material (5) via an imaging beam bath (11), the light-sensitive material (5) being moved at a relative speed relative to the light modulator (4) substantially perpendicularly to the direction of the rows of light-modulated cells (8), and the data pattern to be imaged on the light-sensitive material (5) being displayed in each row in succession for a respective holding time (T, T') starting in the first used row of the light modulator (4) and subsequently being displaced to the following row of the light modulator (4), until data patterns are displaced out of the last used row at a displacement rate which keeps the image (10) of a given data pattern in the centre stationary relative to the light-sensitive material (5), the image (10) of the data pattern being held substantially stationary relative to the light-sensitive material (5) during the holding time (T, T') in that the relative movement between the light modulator (4) and the light-sensitive material (5) is substantially compensated during the holding time, **characterised in that** the image (10) of the data pattern is moved with a periodic movement profile relative to the light modulator (4), the movement profile having a gently rising flank (24) and a steeply descending flank (26), in particular a sawtooth shape, in a spatio-temporal representation, **in that** the movement profile is synchronised with the displacement of the data pattern between the rows, in particular the gently rising flank (24) being executed during the holding time (T, T'), and **in that** the light source (2) is switched off during the steeply descending flank (26) and/or all of the light-modulated cells (8) are deactivated during the steeply falling flank (26).

2. Method according to any one of the preceding claims, **characterised in that** the imaging beam path (11) is displaced in order to move the image (10) of the data pattern.

3. Method according to any one of the preceding claims, **characterised in that** an electric voltage (13) is varied, exploiting an electro-optical effect, in particular the Kerr effect, in order to displace the imaging beam path (11).

4. Method according to either of the preceding claims 2 or 3, **characterised in that** a deflecting mirror and/or a lens (9) and/or a prism and/or a wedge plate is moved mechanically in order to displace the imaging beam path.

5. Method according to any one of the preceding claims, **characterised in that** the holding time (T, T') is selected to be less than the reciprocal of the displacement rate.

6. Method according to claim 5, **characterised in that** the light source (2) is operated in a pulsed manner and/or the light-modulator (4) is periodically deactivated in order to reduce the holding time (T, T').

## Revendications

1. Procédé d'exposition de planches d'impression (5), avec lequel de la lumière provenant d'une source de lumière (2) est reproduite sur un modulateur de lumière (4) bidimensionnel équipé d'une multitude de rangées de cellules modulant la lumière (8) et est modulée par celui-ci, après cela, le modulateur de lumière (4) est reproduit par le biais d'une trajectoire du faisceau de reproduction (11) sur un matériau photosensible (5), le matériau photosensible (5) se déplaçant sensiblement perpendiculairement à la direction des rangées de cellules modulant la lumière (8) à une vitesse relative par rapport au modulateur de lumière (4) et les motifs de données à reproduire sur le matériau photosensible (5) étant affichés, en commençant dans la première rangée utilisée du modulateur de lumière (4), les uns après les autres dans chaque rangée à chaque fois durant un temps de maintien (T, T') et étant ensuite décalés respectivement dans la rangée suivante du modulateur de lumière (4), jusqu'à ce que les motifs de données soient sortis par décalage de la dernière rangée utilisée, avec une vitesse de décalage par le biais de laquelle la reproduction (10) d'un motif de données donné est maintenue stationnaire en moyenne par rapport au matériau photosensible (5), la reproduction (10) du motif de données étant maintenue, durant le temps de maintien (T, T'), sensiblement stationnaire par rapport au matériau photosensible (5) en compensant sensiblement le mouvement relatif entre le modulateur de lumière (4) et le matériau photosensible (5) durant le temps de maintien, **caractérisé en ce que** la reproduction (10) du motif de données est déplacée par rapport au modulateur de lumière (4) selon un profil de mouvement périodique, le profil de mouvement présentant dans une représentation emplacement-temps un front montant plat (24) et un front descendant abrupt (26), en particulier une forme de dent de scie,
**en ce que** le profil de mouvement est synchronisé avec le décalage des motifs de données entre les rangées, en particulier le front montant plat (24) étant exécuté durant le temps de maintien (T, T'), **en ce que** la source de lumière (2) est coupée durant le front descendant abrupt (26) et/ou toutes les cellules modulant la lumière (8) sont mises dans un mode inactif durant le front descendant abrupt (26).

2. Procédé selon la première revendication, **caractérisé en ce que** la trajectoire du faisceau de reproduction (11) est décalée afin de déplacer la reproduction (10) du motif de données.

3. Procédé selon l'une quelconque des revendications précédentes, **caractérisé en ce qu'**une tension électrique (13) est variée en utilisant un effet électro-optique, en particulier l'effet de Kerr, afin de décaler la trajectoire du faisceau de reproduction (11).

4. Procédé selon l'une des revendications 2 ou 3, **caractérisé en ce qu'**un miroir de déviation et/ou une lentille (9) et/ou un prisme et/ou une clavette est déplacé mécaniquement pour décaler la trajectoire du faisceau.

5. Procédé selon l'une quelconque des revendications précédentes, **caractérisé en ce que** le temps de maintien (T, T') est choisi plus petit que la valeur inverse de la vitesse de décalage.

6. Procédé selon la revendication 5, **caractérisé en ce que** l'on fait fonctionner la source de lumière (2) de manière impulsionnelle et/ou le modulateur de lumière (4) est mis périodiquement dans un mode inactif afin de réduire le temps de maintien (T, T').
